# FASCICULE DE BREVET EUROPEEN

(11) **EP 0 452 173 B1**
(45) Date de publication et mention de la délivrance du brevet: **06.07.1994**
(21) Numéro de dépôt: 91400738.0
(22) Date de dépôt: 20.03.1991
(51) Int. Cl.: G05D 16/20, B60T 13/68

(54) **Système de régulation de pression à commande électrique pour un circuit hydraulique**
Elektrisch betätigte Druckregeleinrichtung für Hydraulikschaltung
Electrically operated pressure regulating device for hydraulic circuit

(30) Priorité: 12.04.1990 FR 9004701
(43) Date de publication de la demande: 16.10.1991
(73) Titulaire: ALLIEDSIGNAL EUROPE SERVICES TECHNIQUES, 93700 Drancy (FR)
(72) Inventeur: Kervagoret, Gilbert, 126 rue de Stalingrad, F-93700 Drancy (FR)
(74) Mandataire: Bentz, Jean-Paul

(56) Documents cités:
- EP-A- 0 227 209
- DE-A- 3 119 445
- FR-A- 2 503 893
- US-A- 4 744 389

## Description

L'invention concerne un système de régulation de pression à commande électrique pour un circuit hydraulique.

Elle est particulièrement adaptée aux systèmes de freinage de véhicules automobiles à antiblocage des roues au freinage. Les systèmes actuels d'antiblocage mettent en oeuvre, entre un générateur de fluide sous pression et un moteur hydraulique, une électrovalve commandée par un calculateur en fonction de signaux représentatifs de la rotation des roues du véhicule pour, de manière générale, détendre la pression du fluide dans le moteur hydraulique lorsque le calculateur détecte l'imminence du blocage d'une roue, puis connecter une deuxième source de fluide sous pression pour augmenter à nouveau la pression, jusqu'à une nouvelle détection d'imminence de blocage, le cycle se renouvelant alors.

L'électrovalve utilisée est une électrovalve fonctionnant en tout-ou-rien. Or les périodes d'antiblocage où des cycles tels le cycle précité se réalisent, durent un certain temps pendant lequel l'électrovalve change de très nombreuses fois d'états dans un temps très court. Cela provoque un bruit désagréable de battement de la partie mobile de l'électrovalve.

Par ailleurs, le système fonctionnant en tout-ou-rien, il apparait des à-coups de pression dans les freins engendrant des régimes transitoires mal contrôlés.

La présente invention a pour but d'obvier à ces inconvénients en mettant en oeuvre une électrovalve dite proportionnelle assurant dans le circuit utilisateur une pression hydraulique fonction du courant circulant dans la bobine de l'électrovalve dans une plage déterminée de déplacement du noyau magnétique de l'électrovalve.

Une telle électrovalve présente alors l'avantage de pouvoir être commandée en faisant simplement varier le courant circulant dans la bobine sans nécessiter de battements ; il en résulte donc une forte diminution des à-coups de pression dans les freins. En outre, une telle électrovalve peut aisément être commandée par un calculateur assurant un découpage à fréquence variable d'un courant continu tel qu'on le trouve à bord d'un véhicule automobile, ou bien un découpage à fréquence fixe et à rapport cyclique variable, l'intensité du courant intégré par la bobine étant alors fonction du rapport cyclique.

Une telle électrovalve est par exemple décrite dans US-A-4,744,389. Toutefois, l'électrovalve décrite dans ce document ne peut pas être disposée dans un circuit hydraulique de freinage à antiblocage des roues du fait des pressions mises en oeuvre, notamment lors de l'excitation de l'électrovalve. En effet, l'électrovalve de ce document est conçue pour fonctionner en permanence dans un système de régulation d'une pression relativement faible. En effet la force engendrée par le ressort de rappel utilisé s'oppose directement à la force de réaction hydraulique appliquée sur le tiroir. Cette limitation physique interdit donc l'utilisation de telle électrovalve avec des pressions élevées dans le moteur hydraulique.

La présente invention a donc pour objet un système de régulation de pression pour un circuit hydraulique comprenant au moins un générateur de fluide sous pression, un moteur hydraulique et un réservoir de fluide sous basse pression, et incluant une électrovalve pilotée par un calculateur et comportant une bobine électrique et un noyau magnétique coulissant commandant un tiroir coulissant dans un alésage prévu dans un corps, le tiroir déterminant deux chambres disposées de part et d'autre du tiroir dans l'alésage.

Selon l'invention, le tiroir comprend une enceinte hydraulique déterminant une force de réaction s'opposant à la force engendrée par la bobine, l'enceinte étant connectée à l'une des chambres tant que l'électrovalve n'est pas excitée, tandis qu'elle est connectée au moteur hydraulique après excitation, un moyen élastique rappelant le tiroir et le noyau en position de repos.

De préférence, l'enceinte est constituée par un alésage borgne pratiqué dans le tiroir, une aiguille en appui sur le corps fermant l'enceinte de façon sensiblement étanche, tandis qu'un perçage radial la fait communiquer avec une gorge prévue à la périphérie du tiroir.

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux deux planches de dessins sur lesquelles :
- la Figure 1 représente schématiquement en coupe un mode de réalisation d'un système conforme à la présente invention en position de repos,
- la Figure 2 représente schématiquement en coupe partielle le tiroir de l'électrovalve selon un autre mode de réalisation conforme à la présente invention.

On sait que la bobine des électrovalves dites proportionnelles, présente la caractéristique essentielle de pouvoir fournir un effort sensiblement constant pour un courant déterminé dans une plage de déplacement du noyau magnétique non négligeable, de l'orde de 2 à 3 mm. Cette caractéristique est généralement obtenue grâce à une géométrie particulière des pièces polaires. Cette caractéristique est mise en oeuvre dans la présente invention pour assurer la fonction requise par modulation du courant circulant dans la bobine pour éviter un fonctionnement avec une partie mobile battant très rapidement.

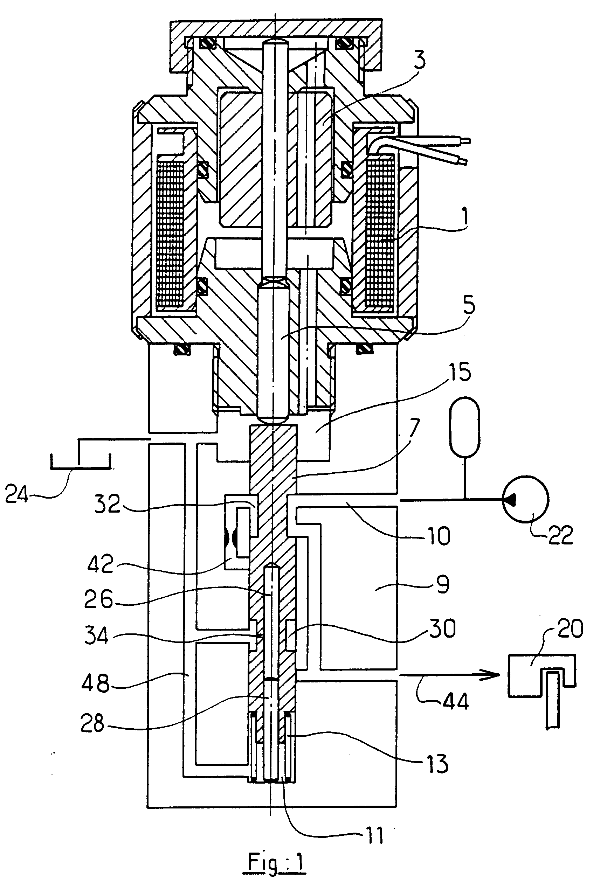

Figure 1, on reconnait une telle électrovalve comprenant une bobine d'excitation 1, un noyau magnétique coulissant 3 pourvu de son poussoir 5 s'appuyant sur un tiroir 7 coulissant dans un alésage d'un corps 9. Le tiroir 7 est ramené en position de repos par un ressort 13.

Le tiroir 7 est usiné de manière à pouvoir ouvrir ou fermer une communication entre un moteur hydraulique utilisateur 20, une source de fluide sous pression 22 et un réservoir 24 conformément aux systèmes de régulation de pression hydraulique généralement utilisés. Pour ce faire, deux gorges 30 et 32 distantes l'une de l'autre sont prévues à la périphérie du tiroir 7.

Les deux chambres 11 et 15 situées de part et d'autre du tiroir 7 dans l'alésage sous soumises à la même pression. Une enceinte 26, constituée par un alésage borgne pratiqué dans le tiroir 7, détermine la force de réaction s'opposant à la force engendrée par la bobine 1. Cette enceinte 26 est fermée de façon sensiblement étanche par une aiguille 28 en appui sur le corps 9 de l'ensemble, et communique avec la gorge 30 au moyen d'un perçage radial 34.

En position de repos, telle que représentée, la source de fluide sous pression 22 est en communication avec le moteur hydraulique 20 par l'intermédiaire de la gorge 32, tandis que l'enceinte 26 est en communication avec le réservoir 24 et les deux chambres d'extrêmité 11 et 15. Le tiroir 7 n'est alors soumis qu'à la force engendrée par le ressort 13.

Lorsque l'électrovalve est excitée, par exemple en période d'antiblocage des roues dans le cas de l'application préférée de l'invention, tout d'abord le courant circulant dans la bobine, engendre une force ne s'opposant qu'à celle du ressort 13 quelle que soit la pression régnant dans le circuit hydraulique. Ceci permet notamment à l'électrovalve de ne pas présenter une importante consommation électrique. Le déplacement subséquent du tiroir 7 coupe tout d'abord toute communication entre la source 22 et le moteur 20, la gorge 32 n'étant plus en regard du conduit 10 d'arrivée de fluide sous pression, mais restant en regard du conduit 44 de sortie du fluide vers le moteur hydraulique 20. l'enceinte 26 reste pendant ce temps connectée au réservoir 24 par l'intermédiaire de la gorge 30. La seule force s'opposant au déplacement du tiroir 7 reste encore celle engendrée par le ressort 13.

Le courant augmentant dans la bobine 1 entraîne un déplacement supplémentaire du tiroir 7 à l'encontre de ce ressort 13. Ce déplacement met d'abord la gorge 30 en regard du conduit 44 communiquant avec le moteur hydraulique 20, le conduit 48 communiquant avec le réservoir restant encore en regard de la gorge 30. Il se produit donc une détente de la pression régnant dans le moteur 20 qui est alors directement connecté au réservoir 24. La pression du fluide dans l'enceinte 26 est alors négligeable puisqu'elle est sensiblement égale à celle régnant dans le réservoir 24, et la seule force s'opposant encore au déplacement du tiroir 7 reste celle engendrée par le ressort 13.

Une augmentation subséquente du courant dans la bobine 1 entraîne encore un déplacement (vers le bas sur la Figure) du tiroir 7 à l'encontre du ressort 13. Ceci ferme la communication entre l'enceinte 26 et le réservoir 24 puisque le conduit de sortie 48 du fluide vers le réservoir 24 n'est plus en regard de la gorge 30 qui est alors toujours en regard du conduit 44 communiquant avec le moteur hydraulique 20. l'enceinte 26 est alors en communication avec le moteur 20 ce qui détermine une réaction hydraulique s'opposant au déplacement (vers le bas sur la Figure) du tiroir 7. On voit alors qu'en modulant, par exemple par découpage, le courant circulant dans la bobine 1, le tiroir 7 va prendre une position qui est fonction de la pression régnant dans l'enceinte 26, et l'on pourra, en pilotant judicieusement ce courant, appliquer au moteur 20 la pression de fluide désirée. En effet, la réaction hydraulique engendrée dans l'enceinte 26 va automatiquement ouvrir ou fermer les communications entre le moteur 20 et la source de fluide sous pression 22 par exemple par l'intermédiaire d'une restriction 42 et entre le moteur 20 et le réservoir 24 pour chaque valeur déterminée de l'intensité du courant circulant dans la bobine 1.

Bien évidemment, à la place du ressort 13, on pourra disposer de façon télescopique plusieurs ressorts présentant différentes raideurs pour modifier en conséquence la force s'opposant à celle engendrée par le courant dans la bobine 1.

Selon un autre mode de réalisation, les chambres situées de part et d'autre du tiroir 7 communiquent avec la source de fluide sous pression 22. L'enceinte 26, dans les premières phases de fonctionnement décrites ci-avant, communique avec l'une de ces chambres de manière à ce qu'aucune réaction hydraulique ne soit engendrées au départ sur le tiroir 7 grâce à une communication avec le réservoir 24.

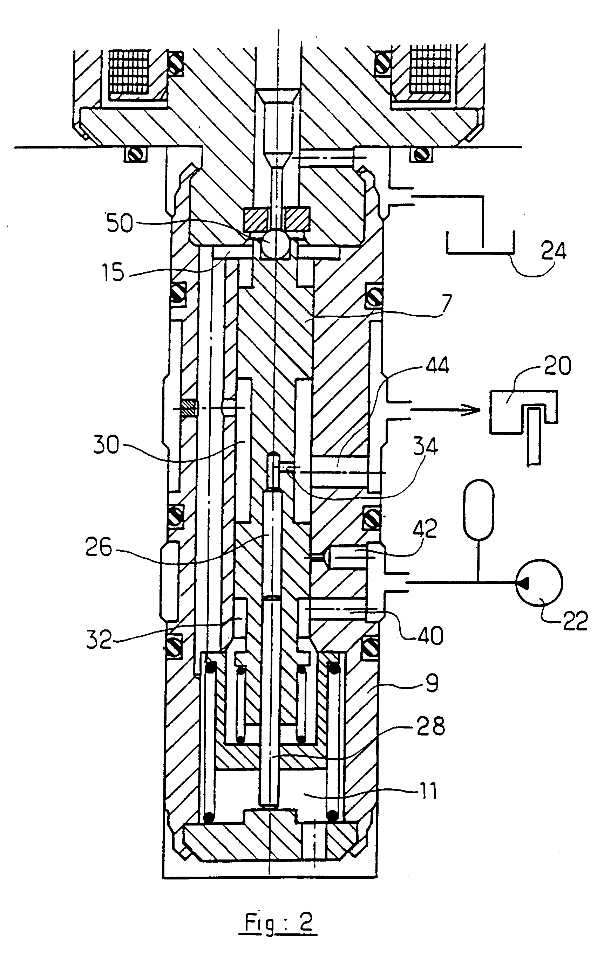

Cette dernière caractéristique apparait Figure 2 où une autre réalisation a été partiellement et schématiquement représentée. En effet, ici, les chambres 11 et 15 communiquent avec la source 22 par l'intermédiaire du conduit 40. Au repos l'enceinte 26 communique par l'intermédiaire du perçage 34 et de la gorge 30, avec la chambre 11 et, par suite, avec la source 22. Selon cette réalisation, une valve 50 normalement fermée disposée entre la chambre 15 et le réservoir 24 permet d'isoler totalement le circuit hydraulique sous pression du réservoir lorsque l'électrovalve n'est pas excitée. Cet aspect est particulièrement avantageux lorsque la source normale de fluide sous pression est hydrostatique, tel un maître cylindre, car il permet de s'affranchir des problèmes d'appairage ou de tolérance entre le tiroir 7 et le corps 9. Lorsque l'électrovalve est excitée, la valve 50 s'ouvre et les fuites internes sont largement compensées par la source 22 qui est alors dynamique, par exemple une pompe.

Comme on le constatera, la force de rappel est ici engendrée par deux ressorts télescopiques disposés dans la chambre 11. Le fonctionnement est similaire à celui du mode de réalisation illustré Figure 1. Au repos, la source 22 et le moteur 20 sont en communication. Lorsqu'un courant circule dans la bobine, le tiroir 7 se meut (vers le bas sur la Figure), isolant tout d'abord la source 22 de la chambre 11, l'enceinte 26 restant en communication avec le moteur 20. Simultanément, la valve 50 s'ouvre, les chambres 11 et 15 communiquant alors avec le réservoir 24. Il en est de même pour l'enceinte 26 et le moteur 20. Il y a donc détente de la pression. En augmentant l'intensité du courant dans la bobine, le tiroir 7 se déplace encore à l'encontre des ressorts seuls et la communication entre le réservoir 24 et l'enceinte 26 est coupée puisque la gorge 30 n'est plus en regard du conduit de sortie du fluide vers le réservoir 24. En augmentant encore l'intensité, la gorge 30 vient alors en regard du conduit 42 communiquant avec la source 22, par exemple par l'intermédiaire d'une restriction permettant de ralentir l'augmentation suivante de la pression du fluide dans le moteur 20. Une réaction hydraulique se produit alors grâce à l'enceinte 26 et en modulant judicieusement le courant circulant dans la bobine, la pression du fluide dans le moteur 20 peut être parfaitement contrôlée.

Bien que seuls certains modes de réalisation de l'invention aient été décrits, il est évident que l'homme du métier pourra y apporter de nombreuses modifications sans sortir du cadre de l'invention telle que définie par les revendications annexées.

## Revendications

1. Système de régulation de pression pour un circuit hydraulique comprenant au moins un générateur (22) de fluide sous pression, un moteur hydraulique (20) et un réservoir (24) de fluide sous basse pression, et incluant une électrovalve pilotée par un calculateur et comportant une bobine électrique (1) et un noyau magnétique (3) coulissant commandant un tiroir (7) coulissant dans un alésage prévu dans un corps (9), ledit tiroir (7) déterminant deux chambres (11,15) disposées de part et d'autres du tiroir (7) dans ledit alésage, caractérisé en ce que ledit tiroir (7) comprend une enceinte hydraulique (26) déterminant une force de réaction s'opposant à la force engendrée par ladite bobine (1), ladite enceinte (26) étant connectée à l'une desdites chambres (11,15) tant que l'électrovalve n'est pas excitée, tandis qu'elle est connectée audit moteur hydraulique (20) après excitation, un moyen élastique (13) rappelant ledit tiroir (7) et ledit noyau (3) en position de repos.

2. Système de régulation de pression selon la revendication 1, caractérisé en ce que ladite enceinte (26) est constituée par un alésage borgne pratiqué dans ledit tiroir (7), une aiguille (28) en appui sur ledit corps fermant ladite enceinte (26) de façon sensiblement étanche, tandis qu'un perçage radial (34) la fait communiquer avec une gorge (30) prévue à la périphérie dudit tiroir (7).

3. Système de régulation de pression selon la revendication 1 ou 2, caractérisé en ce que ledit moyen élastique (13) est constitué par un ressort logé dans l'une (11) desdites chambres.

4. Système de régulation de pression selon la revendication 1 ou 2, caractérisé en ce que ledit moyen élastique (13) est constitué par un ensemble de ressorts de différentes raideurs disposés de façon télescopiques dans l'une (11) desdites chambres.

5. Système de régulation de pression selon l'une quelconque des revendications 1 à 4, caractérisé en ce que lesdites chambres (11,15) sont en permanence en communication avec ledit réservoir (24).

6. Système de régulation de pression selon l'une quelconque des revendication 1 à 4, caractérisé en ce que lesdites chambres (11,15) sont en communication avec ladite source (22) lorsque l'électrovalve n'est pas excitée, et en communication avec ledit réservoir (24) lorsque l'électrovalve est excitée.

7. Système de régulation de pression selon la revendication 6, caractérisé en ce qu'une valve (50) normalement fermée est disposée entre l'une (15) desdites chambres et le réservoir (24), de manière à isoler le circuit hydraulique sous pression du réservoir (24) lorsque l'électrovalve n'est pas excitée.

## Patentansprüche

1. Druckregelsystem für einen Hydraulikkreis mit wenigstens einem Fluiddruckgenerator (22), einem Hydraulikmotor (20) und einem Niederdruckfluidvorratsbehälter (24) sowie einem von einem Rechner gesteuerten Elektroventil, das eine elektrische Spule (1) und einen gleitenden Magnetkern (3) enthält, der einen Schieber (7) steuert, der in einer in einem Gehäuse (9) vorgesehenen Bohrung gleitet, wobei der Schieber (7) zwei Kammern (11, 15) abgrenzt, die in der Bohrung auf der einen und auf der anderen Seite des Schiebers (7) angeordnet sind, dadurch gekennzeichnet, daß der Schieber (7) einen Hydraulikraum (26) enthält, der eine Reaktionskraft bestimmt, die der von der Spule (1) erzeugten Kraft entgegenwirkt, wobei der Raum (26) mit einer der Kammern (11,15) verbunden ist, solange das Elektroventil nicht erregt ist, während er nach der Erregung mit dem Hydraulikmotor (20) verbunden ist, wobei ein Federmittel (13) den Schieber (7) und den Kern (3) in die Ruhestellung zurückstellt.

2. Druckregelsystem nach Anspruch 1, dadurch gekennzeichnet, daß der Raum (26) durch eine im Schieber (7) ausgebildete Blindbohrung gebildet ist, wobei eine sich an dem Gehäuse abstützende Nadel (28) den Raum (26) im wesentlichen dicht abschließt, während eine radiale Bohrung (34) ihn mit einer am Umfang des Schiebers (7) vorgesehenen Nut (30) verbindet.

3. Druckregelsystem nach Anspruch 1 oder 2, dadurch gekennzeichnet, daß das Federmittel (13) durch eine in einer (11) der Kammern angeordnete Feder gebildet ist.

4. Druckregelsystem nach Anspruch 1 oder 2, dadurch gekennzeichnet, daß das Federmittel (13) durch eine Baugruppe von Federn mit unterschiedlichen Steifigkeiten gebildet ist, die teleskopartig in einer (11) der Kammern angeordnet sind.

5. Druckregelsystem nach einem der Ansprüche 1 bis 4, dadurch gekennzeichnet, daß die Kammern (11, 15) permanent mit dem Vorratsbehälter (24) verbunden sind.

6. Druckregelsystem nach einem der Ansprüche 1 bis 4, dadurch gekennzeichnet, daß die Kammern (11, 15) mit der Quelle (22) verbunden sind, wenn das Elektroventil nicht erregt ist, und daß sie mit dem Vorratsbehälter (24) verbunden sind, wenn das Elektroventil erregt ist.

7. Druckregelsystem nach Anspruch 6, dadurch gekennzeichnet, daß ein normalerweise geschlossenes Ventil (50) zwischen einer (15) der Kammern und dem Vorratsbehälter (24) so angeordnet ist, daß der unter Druck stehende Hydraulikkreis vom Vorratsbehälter (24) getrennt ist, wenn das Elektroventil nicht erregt ist.

## Claims

1. Pressure-regulating system for a hydraulic circuit, comprising at least one generator (22) of fluid under pressure, a hydraulic motor (20) and a reservoir (24) of fluid under low pressure and including a solenoid valve controlled by a computer and comprising an electrical coil (1) and a sliding magnetic core (3) controlling a slide (7) which slides in a bore provided in a body (9), said slide (7) defining two chambers (11, 15) arranged on either side of the slide (7) in said bore, characterized in that said slide (7) comprises a hydraulic cell (26) determining a reaction force opposing the force generated by said coil (1), said cell (26) being connected to one of said chambers (11, 15) as long as the solenoid valve is not energized, whilst it is connected to said hydraulic motor (20) after energization, an elastic means (13) returning said slide (7) and said core (3) to the rest position.

2. Pressure-regulating system according to Claim 1, characterized in that said cell (26) consists of a blind bore made in said slide (7), while a needle (28) bearing on said body closes said cell (26) substantially sealingly, a radial duct (34) putting it in communication with a groove (30) provided on the periphery of said slide (7).

3. Pressure-regulating system according to Claim 1 or 2, characterized in that said elastic means (13) consists of a spring seated in one (11) of said chambers.

4. Pressure-regulating system according to Claim 1 or 2, characterized in that said elastic means (13) consists of a set of springs of different stiffnesses arranged telescopically in one (11) of said chambers.

5. Pressure-regulating system according to any one of claims 1 to 4, characterized in that said chambers (11, 15) are permanently in communication with said reservoir (24).

6. Pressure-regulating system according to any one of Claims 1 to 4, characterized in that said chambers (11, 15) are in communication with said source (22) when the solenoid valve is not energized and are in communication with said reservoir (24) when the solenoid valve is energized.

7. Pressure-regulating system according to Claim 6, characterized in that a normally closed valve (50) is located between one (15) of said chambers and the reservoir (24), so as to isolate the hydraulic circuit under pressure from the reservoir (24) when the solenoid valve is not energized.
